# EUROPÄISCHE PATENTSCHRIFT

(11) **EP 1 902 891 B1**
(45) Veröffentlichungstag und Bekanntmachung des Hinweises auf die Patenterteilung: **07.01.2009**
(21) Anmeldenummer: 06019896.7
(22) Anmeldetag: 22.09.2006
(51) Int. Cl.: B60K 17/36, B60K 17/04

(54) **Antriebsvorrichtung für Tandemachsen und Verfahren zum Antrieb von Tandemachsen**
System and method for driving tandem axles
Dispositif et procédé d'entraînement d'essieux en tandem

(43) Veröffentlichungstag der Anmeldung: 26.03.2008
(73) Patentinhaber: NAF Neunkirchener Achsenfabrik AG, 91077 Neunkirchen (DE)
(72) Erfinder: Zitzmann, Martin, 91090 Effelrich (DE); Sauer, Ralf, 91077 Neunkirchen am Brand (DE)
(74) Vertreter: Patentanwälte Hofstetter, Schurack & Skora

(56) Entgegenhaltungen:
- DE-A1- 4 120 801
- SU-A1- 1 066 850

## Beschreibung

Die vorliegende Erfindung betrifft eine Antriebsvorrichtung für Tandemachsen eines Fahrzeuges oder einer selbstfahrenden Arbeitsmaschine, die einen fest an einem Fahrzeugrahmen oder Rahmen der Arbeitsmaschine angeordneten Achsträger und einen drehbar am Achsträger gelagerten Tandemkasten umfasst, sowie mit mindestens einer Antriebswelle, wobei das Antriebsmoment der Antriebswelle über ein Doppelplanetengetriebe bestehen aus einem ersten antriebsseitigen Planetengetriebe mit einem ersten Sonnenrad und ersten Planetenrädern und einem abtriebsseitigen Planetengetriebe mit einem zweiten Sonnenrad und zweiten Planetenrädern auf einen Tandemachsenantrieb übertragen wird und die ersten und zweiten Planetenräder über jeweils eine Planetenwelle miteinander verbunden sind, wobei die ersten Planetenräder gegen einen ersten, mit dem Achsträger verbundenen Zahnkranz und die zweiten Planetenräder gegen einen zweiten, im Tandemkasten angeordneten Zahnkranz abgestützt sind. Die Erfindung betrifft weiterhin ein Verfahren zum Antrieb von Tandemachsen eines Fahrzeuges oder einer selbstfahrenden Arbeitsmaschine.

Tandemachsen oder auch Boogieachsen haben den Nachteil, dass sich die Achsenschwinge abhängig von Übersetzungsverhältnissen und den geometrischen Verhältnissen mehr oder weniger aufrichtet, wenn ein Drehmoment eingeleitet wird. Dadurch ergibt sich eine ungleichmäßige Verteilung der Radlast zwischen den Vorder- und Hinterrädern, die an den jeweiligen Enden der Achsschwingen angeordnet sind. Daher kommt es vor, dass zumindest eines der Räder die Bodenhaftung verliert bzw. der Bodendruck stark reduziert wird. Da die beschriebenen Tandemachsen hauptsächlich in Forstmaschinen, Muldenkippern und Gradern zum Einsatz kommen, die insbesondere in unwegsamem Gelände operieren, führt dies zu deutlichen Einschränkungen während des Betriebs der entsprechenden Fahrzeuge und zu unterschiedlichem Reifenverschleiß.

Um den genannten Aufstelleffekt zu verhindern, wird bei bekannten Vorrichtungen in der Achsschwinge eine Übersetzung von 1:1 oder von nahezu 1:1 verwendet. Nachteilig hierbei ist jedoch, dass die Komponenten innerhalb der Achsschwinge ein hohes Drehmoment übertragen müssen und daher entsprechend großzügig dimensioniert werden. Derartige Achsschwingen werden daher sehr teuer, schwer und verlieren an Bodenfreiheit. Weitere bekannte Vorrichtungen zur Verhinderung eines Aufstelleffekts einer Tandemachse verwenden ein Doppelplanetengetriebe oder ein Messgetriebe und nutzen dessen Rückdrehmoment um den Aufstelleffekt zu reduzieren. Entsprechende Vorrichtungen sind in der DE-A1-19802371 und in der DE-A1-4120801 beschrieben. Das Rückdrehmoment ist dabei immer proportional zum Eingangsmoment ist. Dadurch lässt sich aber ein Aufstelleffekt, der in manchen Fahrsituationen auch wünschenswert sein kann, nicht herbeiführen. Das Vorder- bzw. Hinterrad der Tandemachse lässt sich durch diesen Mechanismus nicht gewollt anheben.

Eine weitere aus dem Stand der Technik bekannte Vorrichtung ist in der DE-A1-19616405 beschrieben. Diese Vorrichtung verwendet Hydraulikzylinder, die außen zwischen einem Tandemkasten und dem Fahrzeugrahmen angebracht werden und mit einem Druck beaufschlagt werden, der proportional zum Betriebsdruck eines antreibenden Hydromotors geschaltet wird. Nachteilig hierbei ist jedoch, dass die außenliegenden Hydraulikzylinder anfällig sind, da sie den Umwelteinflüssen ausgesetzt sind. Zudem ist die Installation zwischen Fahrzeugrahmen und Tandemschwinge aufwendig und schränkt die unabhängige Bewegungsfreiheit der Tandemachse ein. Eine unterschiedliche Steuerung der linken und rechten Seite ist nicht möglich.

Schließlich beschreibt die DE-U 1-20217910 eine Vorrichtung zur Regulierung des Aufstellens einer Tandemachse, wobei ein Gehäuse eines mit Druck beaufschlagbaren Drehkolbenzylinders fest mit einem Achsgehäuse einer Antriebswelle verbunden ist und ein beweglicher Kolben des Drehkolbenzylinders ein nachgeschaltetes Planetengetriebe mit einer Planetenachse und Planetenrädern antreibt, wobei die Planetenachse des Planetengetriebes fest mit dem Achsgehäuse oder dem Gehäuse des Drehkolbenzylinders verbunden ist und die Planetenräder auf einen Zahnkranz, der mit einem Tandemachsengehäuse verbunden ist, einwirken. Durch die Zwischenschaltung eines Drehkolbenzylinders und des dem Drehkolbenzylinder nachgeschalteten Planetengetriebes ist es möglich, einen vordefinierten Druck auf das Tandemachsengehäuse auszuüben und entweder einem Aufstelleffekt der Tandemachse entgegenzuwirken oder ein aktives Anheben der Tandemachse durchzuführen. Dabei wird die Drehrichtung des Drehkolbens bei Druckeinleitung durch das Planetengetriebe umgekehrt, so dass auf das Tandemachsengehäuse entsprechende Gegenmomente wirken.

Nachteilig an den genannten Antriebsvorrichtungen ist jedoch, dass diese entweder dauerhaft das Aufstellen einer Tandemachse ohne die Möglichkeit eines gewollten Ausnutzens des Aufstelleffektes oder einer entsprechenden Antriebsleistung verhindern oder konstruktiv aufwendig und in der Herstellung und Wartung teuer sind.

Es ist daher Aufgabe der vorliegenden Erfindung, eine Antriebsvorrichtung für Tandemachsen und ein Verfahren zum Antrieb von Tandemachsen eines Fahrzeuges oder einer selbstfahrenden Arbeitsmaschine bereitzustellen, die zuverlässig die Möglichkeit eines gewollten Ausnutzens des Aufstelleffektes oder einer entsprechenden Antriebsleistung bereitstellt, das ungewollte Aufstellen der Tandemachse in einem vorbestimmbaren Maße verhindern und zudem konstruktiv relativ einfach und kostengünstig auszuführen sind.

Gelöst wird diese Aufgabe durch eine Antriebsvorrichtung für Tandemachsen und ein Verfahren zum Antrieb von Tandemachsen eines Fahrzeuges oder einer selbstfahrenden Arbeitsmaschine mit den Merkmalen der unabhängigen Ansprüche 1 und 13.

Vorteilhafte Ausgestaltungen sind in den jeweiligen Unteransprüchen beschrieben.

Bei einer erfindungsgemäßen Antriebsvorrichtung für Tandemachsen eines Fahrzeuges oder einer selbstfahrenden Arbeitsmaschine sind ein fest an einem Fahrzeugrahmen oder Rahmen der Arbeitsmaschine angeordneter Achsträger sowie ein drehbar am Achsträger gelagerter Tandemkasten ausgebildet. Des Weiteren weist die Antriebsvorrichtung mindestens eine Antriebswelle auf, wobei das Antriebsmoment der Antriebswelle über ein Doppelplanetengetriebe bestehend aus einem ersten antriebsseitigen Planetengetriebe mit einem ersten Sonnenrad und ersten Planetenrädern und einem abtriebsseitigen Planetengetriebe mit einem zweiten Sonnenrad und zweiten Planetenrädern auf einen Tandemachsenantrieb übertragen wird. Dabei sind die ersten und zweiten Planetenräder jeweils über eine Planetenwelle miteinander verbunden, wobei die ersten Planetenräder gegen einen ersten, mit dem Achsträger verbundenen Zahnkranz und die zweiten Planetenräder gegen einen zweiten, im Tandemkasten angeordneten Zahnkranz abgestützt sind. Erfindungsgemäß ist der zweite Zahnkranz dabei auf den zweiten Planetenrädern verschiebbar ausgebildet, derart, dass er in einer ersten Schaltstellung (EIN) der Antriebsvorrichtung torsionsfest mit dem Tandemkasten verbunden ist und in einer zweiten Schaltstellung (AUS) vom Tandemkasten gelöst und mit dem ersten Zahnkranz verbunden ist. Vorteilhafterweise stützen sich die Reaktionskräfte des Doppelplanetengetriebes an dem ersten und zweiten Zahnkranz ab und erzeugen somit ein Drehmoment am Tandemkasten, welches - proportional zum Eingangsmoment - dem Aufrichten des Tandemkastens durch die Radkräfte entgegenwirkt. Dieser Leistungsfluss über die beiden Zahnkränze findet in der Schaltstellung (EIN) statt. In der Schaltstellung (AUS) wird der zweite Zahnkranz vom Tandemkasten gelöst und mit dem ersten Zahnkranz verbunden. Dadurch ist vorteilhafterweise der Tandemkasten nunmehr in der zweiten Schaltstellung ausschließlich drehbar am Achsträger bzw. am Fahrzeugrahmen angeordnet und kann sich frei drehen.

Der Planetentrieb läuft in dieser Schaltstellung entsprechend der Übersetzungsverhältnisse mit und überträgt weiterhin die durch die Antriebswelle erzeugte Antriebsleistung. Das Abtriebsmoment des Planetentriebs wird in der zweiten Schaltstellung (AUS) jedoch funktional betrachtet bereits im Achsträger wieder zurückreduziert und nicht - wie in der ersten Schaltstellung (EIN) - erst im Tandemkasten. Der Eintrieb in den Tandemkasten erfolgt über das zweite Sonnenrad bzw. ein das zweite Sonnenrad umfassende Stirnrad mit dem bereits wieder reduzierten Abtriebsmoment des abtriebsseitigen Planetengetriebes. Die erfindungsgemäße Lösung gewährleistet zum einen zuverlässig die Möglichkeit eines gewollten Ausnutzens des Aufstelleffekts oder eine entsprechende Antriebsleistung durch die zweite Schaltstellung (AUS), des Weiteren wird das ungewollte Aufstellen der Tandemachse in der ersten Schaltstellung (EIN) verhindert und ist zudem konstruktiv relativ einfach und kostengünstig auszuführen.

In einer vorteilhaften Ausgestaltung der erfindungsgemäßen Antriebsvorrichtung ist zum Verbinden des zweiten Zahnkranzes mit dem Tandemkasten in der ersten Schaltstellung (EIN) eine form-, kraft- oder reibschlüssige Verbindung ausgebildet. Die Verbindung kann dabei mittels einer Bolzenverbindung, einer Verzahnung oder über Reiblamellen erfolgen. So ermöglicht vorteilhafterweise eine Verbindung über Reiblamellen ein stoßfreies Kuppeln auch unter Last.

In einer weiteren vorteilhaften Ausgestaltung der Erfindung ist zum Verbinden des zweiten Zahnkranzes mit dem ersten Zahnkranz in der zweiten Schaltstellung (AUS) eine form-, kraft- oder reibschlüssige Verbindung ausgebildet. Diese kann zum Beispiel mittels einer Klauenverzahnung erfolgen.

In einer weiteren vorteilhaften Ausgestaltung der Erfindung umfasst der Tandemachsenantrieb ein Stirnrad, wobei das Stirnrad zugleich das zweite Sonnenrad des abtriebsseitigen Planetengetriebes ausbildet. Dadurch ist gewährleistet, dass die notwendige Baugröße relativ kleingehalten werden kann.

In einer weiteren vorteilhaften Ausgestaltung der erfindungsgemäßen Antriebsvorrichtung weist die Antriebsvorrichtung im Bereich des zweiten Zahnkranzes axiale Anschläge zur Begrenzung der axialen Verschiebbarkeit des zweiten Zahnkranzes auf. Dadurch ist sichergestellt, dass sich der zweite Zahnkranz nicht ungewollt verschieben kann und es zu einer nicht gewollten Änderung der Schaltstellung kommt.

In einer weiteren vorteilhaften Ausgestaltung der erfindungsgemäßen Antriebsvorrichtung weist diese eine Betätigungseinheit zum axialen Verschieben des zweiten Zahnkranzes von der ersten Schaltstellung (EIN) in die zweite Schaltstellung (AUS) oder umgekehrt auf. Die Betätigungseinheit kann dabei mechanisch, hydraulisch und/oder elektrisch ausgebildet sein. Die Betätigungseinheit ist dabei vorteilhafterweise mit dem Führerhaus des Fahrzeuges oder der selbstfahrenden Arbeitsmaschine verbunden, so dass die Umschaltung von der ersten in die zweite Schaltstellung jederzeit durchgeführt werden kann.

Ein erfindungsgemäßes Verfahren zum Antrieb von Tandemachsen eines Fahrzeuges oder einer selbstfahrenden Arbeitsmaschine umfasst folgende Schritte: (a) Einleiten eines Antriebsmoments über eine Antriebswelle und über ein Doppelplanetengetriebe bestehen aus einem ersten antriebsseitigen Planetengetriebe mit einem ersten Sonnenrad und ersten Planetenrädern und einem abtriebsseitigen Planetengetriebe mit einem zweiten Sonnenrad und zweiten Planetenrädern auf einen Tandemachsenantrieb, wobei die ersten und zweiten Planetenräder über jeweils eine Planetenwelle miteinander verbunden sind und die ersten Planetenräder gegen einen ersten, mit dem Achsträger verbundenen Zahnkranz und die zweiten Planetenräder gegen einen zweiten, im Tandemkasten angeordneten Zahnkranz abgestützt sind; und (b) Betätigung einer Betätigungsvorrichtung zum axialen Verschieben des zweiten Zahnkranzes von einer ersten Schaltstellung (EIN) in eine zweite Schaltstellung (AUS) oder umgekehrt, wobei der zweite Zahnkranz auf den zweiten Planetenrädern verschiebbar ausgebildet ist, derart, dass er in der ersten Schaltstellung (EIN) der Antriebsvorrichtung torsionsfest mit dem Tandemkasten verbunden ist und in der zweiten Schaltstellung (AUS) vom Tandemkasten gelöst und mit dem ersten Zahnkranz verbunden ist. Durch das erfindungsgemäße Verfahren ist gewährleistet, dass dem Benutzer des Fahrzeuges oder der selbstfahrenden Arbeitsmaschine zwei Schaltstellungen, nämlich eine erste Schaltstellung (EIN) und eine zweite Schaltstellung (AUS) zur Verfügung stehen. In der Schaltstellung (EIN) erfolgt ein Leistungsfluss über den ersten und zweiten Zahnkranz, so dass ein Drehmoment am Tandemkasten erzeugt wird, welches - proportional zum Eingangsmoment - dem Aufrichten des Tandemkastens durch die Radkräfte entgegenwirkt. In der Schaltstellung (AUS) ist der Tandemkasten mit dem Achsträger bzw. dem Fahrzeugrahmen verbunden und kann sich frei drehen. Der Planetentrieb läuft entsprechend der Übersetzungsverhältnisse mit und überträgt weiterhin die von der Antriebswelle ausgehende Antriebsleistung. Mit der genannten Schaltstellung ist es möglich, einerseits das ungewohnte Aufstellen der Tandemachse zu verhindern und andererseits ein gewolltes Ausnutzen des Aufstelleffekts oder einer entsprechenden Antriebsleistung bereitzustellen.

In einer vorteilhaften Ausgestaltung des erfindungsgemäßen Verfahrens wird zur Durchführung des Verfahrens eine Antriebsvorrichtung eines Fahrzeuges oder einer selbstfahrenden Arbeitsmaschine wie im Vorstehenden beschrieben verwendet.

Weitere Einzelheiten, Merkmale und Vorteile der Erfindung ergeben sich aus der nachfolgenden Beschreibung eines in den Figuren schematisch dargestellten Ausführungsbeispiels.

Es zeigen
- Figur 1: eine Schnittansicht der erfindungsgemäßen Antriebsvorrichtung; und
- Figur 2: eine Detaildarstellung der erfindungsgemäßen Antriebsvorrichtung gemäß Figur 1.

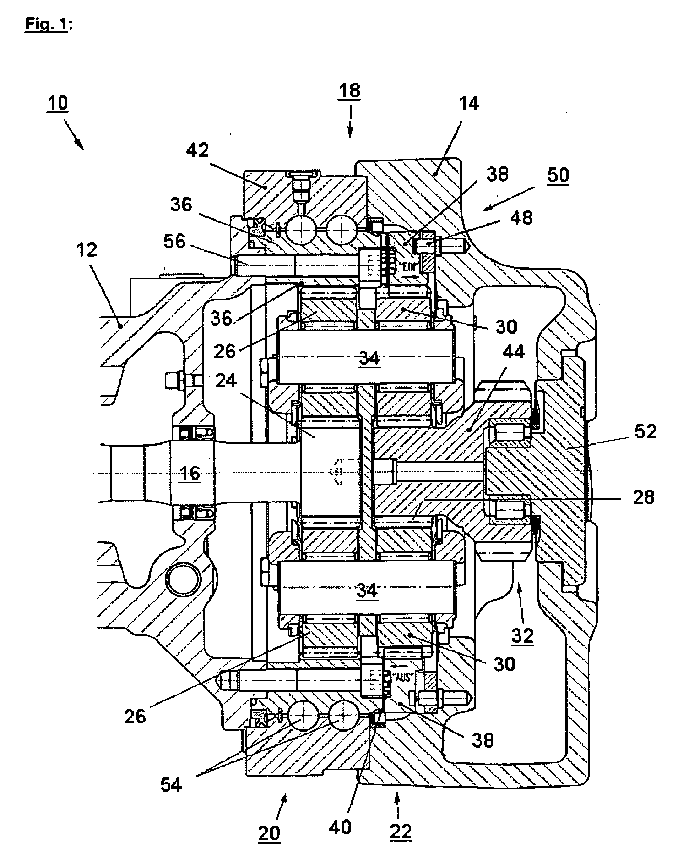

Figur 1 zeigt eine Schnittansicht einer Ausführungsform der Antriebsvorrichtung 10 für eine Tandemachse eines Fahrzeuges oder einer selbstfahrenden Arbeitsmaschine. Das Fahrzeug weist dabei einen Fahrzeugrahmen (nicht dargestellt) auf, an dem ein Achsträger 12 angeordnet ist. Am Achsträger 12 ist ein Tandemkasten 14 über einen Kugeldrehkranz 42 und einem entsprechenden Kugellager 54 drehbar gelagert. Man erkennt, dass die Antriebsvorrichtung 10 eine Antriebswelle 16 aufweist, wobei das Antriebsmoment der Antriebswelle 16 über ein Doppelplanetengetriebe 18 auf einen Tandemachsenantrieb 32 übertragen wird. Das Doppelplanetengetriebe 18 besteht dabei aus einem ersten antriebsseitigen Planetengetriebe 20 mit einem ersten, an der Antriebswelle 16 angeordneten Sonnenrad 24 und entsprechenden ersten Planetenrädern 26 sowie einem abtriebsseitigen Planetengetriebe 22 mit einem zweiten, an einem Stirnrad 44 des Tandemachsenantriebs 32 ausgebildeten Sonnenrad 28 und entsprechenden zweiten Planetenrädern 30. In dem dargestellten Ausführungsbeispiel bildet das Stirnrad 44 zugleich das zweite Sonnenrad 28 des abtriebsseitigen Planetengetriebes 22 aus. Über das Stirnrad 44, als Teil des Tandemachsenantriebs 32, erfolgt eine Kraftübertragung auf die entsprechenden Räder der Tandemachse (nicht dargestellt). Der Tandemachsenantrieb 32 kann dabei ein Zahnradantrieb, ein Ketten- oder Bandantrieb sein. Des Weiteren erkennt man, dass das Stirnrad 44 in dem Tandemachsengehäuse 14 mittels einer Lagerung 52 gelagert ist. Entsprechende Befestigungsvorrichtungen verbinden das Lager 52 fest mit dem Tandemkasten 14. Zudem erkennt man, dass die Antriebswelle 16 mit dem zweiten Sonnenrad 28 bzw. dem Stirnrad 44 koaxial ausgebildet ist.

Die ersten und zweiten Planetenräder 26, 30 sind jeweils über eine Planetenwelle 34 miteinander verbunden, wobei die ersten Planetenräder 26 gegen einen ersten, mit dem Achsträger 12 verbundenen Zahnkranz 36 und die zweiten Planetenräder 30 gegen einen zweiten, im Tandemkasten 14 angeordneten Zahnkranz 38 abgestützt sind. Die Zahnkränze 36, 38 sind dabei als Hohlräder mit Innenverzahnung ausgebildet. Aus der Figur 1 wird deutlich, dass der zweite Zahnkranz 38 auf den zweiten Planetenrädern 30 verschiebbar ausgebildet ist. Figur 1 zeigt hierzu in dem oberen Bereich einen zweiten Zahnkranz 38, der in einer ersten Schaltstellung (EIN) der Antriebsvorrichtung 10 torsionsfest mit dem Tandemkasten14 verbunden ist. In dem gegenüberliegenden, unteren Bereich der Figur 1 ist der zweite Zahnkranz 38 in einer zweiten Schaltstellung (AUS) dargestellt. Man erkennt, dass in dieser Schaltstellung der zweite Zahnkranz 38 vom Tandemkasten 14 gelöst und mit dem ersten Zahnkranz 36 verbunden ist. Zum Verbinden des zweiten Zahnkranzes 38 mit dem Tandemkasten 14 ist in der ersten Schaltstellung (EIN) eine form-, kraft- oder reibschlüssige Verbindung ausgebildet, in dem dargestellten Ausführungsbeispiel erfolgt die Verbindung mittels einer Bolzenverbindung. Aber auch andere Verbindungsmöglichkeiten wie zum Beispiel eine Verzahnung oder die Verbindung über Reiblamellen ist möglich. Zum Verbinden des zweiten Zahnkranzes 38 mit dem ersten Zahnkranz 36 ist in der zweiten Schaltstellung (AUS) eine form-, kraft- oder reibschlüssige Verbindung ausgebildet. In dem dargestellten Ausführungsbeispiel erfolgt die Verbindung mittels einer Klauen-Verzahnung 40.

Der so genannte Aufricht- oder Aufstelleffekt, welcher aus einer ungleichmäßigen Kraftbeanspruchung auf eines der beiden Räder der Tandemachse resultiert, wird in der ersten Schaltstellung (EIN) dadurch verhindert, dass das ungleichmäßige auftretende Kraftmoment in zwei gleichmäßigere Kraftmomente aufgeteilt wird, die einerseits gegen den Achsträger 12 bzw. den Fahrzeugrahmen und andererseits gegen das Tandemgehäuse 14 wirken und damit dem aufsteigenden Rad eine Gegenkraft entgegensetzen. In der zweiten Schaltstellung (AUS) ist der Tandemkasten 14 ausschließlich über den Kugeldrehkranz 42 mit dem Achsträger 12 bzw. dem Fahrzeugrahmen verbunden und kann sich frei drehen. Der Planetentrieb läuft entsprechend der Übersetzungsverhältnisse mit und überträgt weiterhin die von der Antriebswelle 16 eingeleitete Antriebsleistung. Das Abtriebsmoment des Planetentriebs wird in der zweiten Schaltstellung (AUS) jedoch funktional bereits im Achsträger 14 wieder zurückreduziert und nicht - wie in der ersten Schaltstellung (EIN) - erst im Tandemkasten 14. Der Eintrieb in den Tandemkasten 14 erfolgt über das Stirnrad 44 mit dem bereits wieder reduzierten Abtriebsmoment des abtriebsseitigen Planetengetriebes 22.

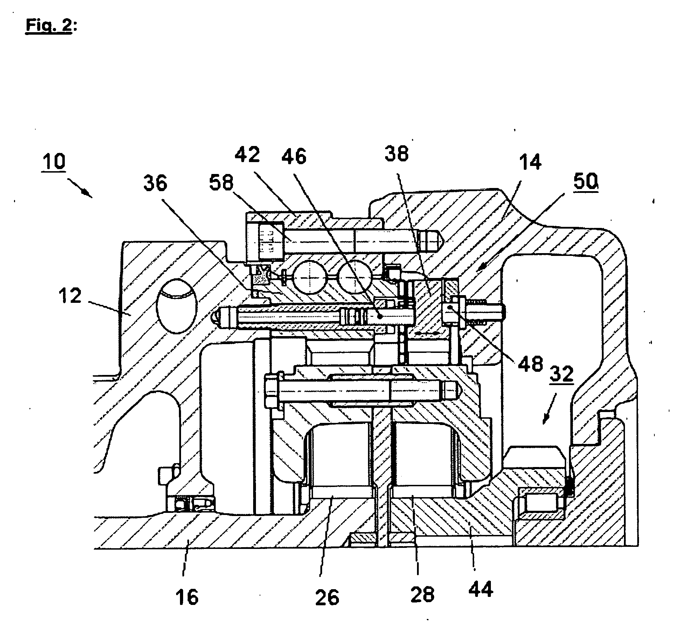

Figur 2 zeigt eine Detaildarstellung der Antriebsvorrichtung 10 gemäß Figur 1. Man erkennt, dass die Antriebsvorrichtung 10 im Bereich des zweiten Zahnkranzes 38 axiale Anschläge 46, 48 zur Begrenzung der axialen Verschiebbarkeit des zweiten Zahnkranzes 38 aufweist. Dadurch wird gewährleistet, dass sich der zweite Zahnkranz 38 nicht ungewollt verschiebt. In dem dargestellten Ausführungsbeispiel bilden die axialen Anschläge 46, 48 zudem eine Betätigungseinheit 50 zum axialen Verschieben des zweiten Zahnkranzes 38 von der ersten Schaltstellung (EIN) in die zweite Schaltstellung (AUS) oder umgekehrt aus. Dabei ist der axiale Anschlag 46 als Kolben und der auf die gegenüberliegende Seite des zweiten Zahnkranzes 38 wirkende axiale Anschlag 48 als Druckbolzen ausgebildet. Es ist jedoch auch möglich, dass die beiden Funktionalitäten, nämlich die Begrenzung der axialen Verschiebbarkeit und das gewollte axiale Verschieben des zweiten Zahnkranzes 38 getrennt werden, wobei zum Beispiel die axialen Anschläge als separate Bauelemente ausgeführt sein können. Die Betätigungseinheit 50 kann zudem mechanisch, hydraulisch und/oder elektrisch ausgebildet sein.

Des Weiteren erkennt man aus den Figuren 1 und 2, dass der erste Zahnkranz 36 mittels einer als Befestigungsbolzen oder Befestigungsschraube ausgebildeten Befestigungsvorrichtung 56 mit dem Achsträger 12 verbunden ist. Ebenfalls über eine als Befestigungsbolzen oder Befestigungsschraube ausgebildete weitere Befestigungsvorrichtung 58 ist der Kugeldrehkranz 42 mit dem Tandemkasten 14 fest verbunden.

## Patentansprüche

1. Antriebsvorrichtung für Tandemachsen eines Fahrzeuges oder einer selbstfahrenden Arbeitsmaschine, die einen fest an einem Fahrzeugrahmen oder Rahmen der Arbeitsmaschine angeordneten Achsträger (12) und einen drehbar am Achsträger (12) gelagerten Tandemkasten (14) umfasst, sowie mit mindestens einer Antriebswelle (16), wobei das Antriebsmoment der Antriebswelle (16) über ein Doppelplanetengetriebe (18) bestehend aus einem ersten antriebsseitigen Planetengetriebe (20) mit einem ersten Sonnenrad (24) und ersten Planetenrädern (26) und einem abtriebsseitigen Planetengetriebe (22) mit einem zweiten Sonnenrad (28) und zweiten Planetenrädern (30) auf einen Tandemachsenantrieb (32) übertragen wird und die ersten und zweiten Planetenräder (26, 30) über jeweils eine Planetenwelle (34) miteinander verbunden sind, wobei die ersten Planetenräder (26) gegen einen ersten, mit dem Achsträger (12) verbundenen Zahnkranz (36) und die zweiten Planetenräder (30) gegen einen zweiten, im Tandemkasten (14) angeordneten Zahnkranz (38) abgestützt sind,
**dadurch gekennzeichnet,**
**dass** der zweite Zahnkranz (38) auf den zweiten Planetenrädern (30) verschiebbar ausgebildet ist, derart, dass er in einer ersten Schaltstellung (EIN) der Antriebsvorrichtung (10) torsionsfest mit dem Tandemkasten (14) verbunden ist und in einer zweiten Schaltstellung (AUS) vom Tandemkasten (14) gelöst und mit dem ersten Zahnkranz (36) verbunden ist.

2. Antriebsvorrichtung nach Anspruch 1,
**dadurch gekennzeichnet,**
**dass** zum Verbinden des zweiten Zahnkranzes (38) mit dem Tandemkasten (14) in der ersten Schaltstellung (EIN) eine form-, kraft- oder reibschlüssige Verbindung ausgebildet ist.

3. Antriebsvorrichtung nach Anspruch 2,
**dadurch gekennzeichnet,**
**dass** die Verbindung des zweiten Zahnkranzes (38) mit dem Tandemkasten (14) in der ersten Schaltstellung (EIN) mittels einer Bolzenverbindung, einer Verzahnung oder über Reiblamellen erfolgt.

4. Antriebsvorrichtung nach einem der vorhergehenden Ansprüche,
**dadurch gekennzeichnet,**
**dass** zum Verbinden des zweiten Zahnkranzes (38) mit dem ersten Zahnkranz (36) in der zweiten Schaltstellung (AUS) eine form-, kraft- oder reibschlüssige Verbindung ausgebildet ist.

5. Antriebsvorrichtung nach Anspruch 4,
**dadurch gekennzeichnet,**
**dass** die Verbindung des zweiten Zahnkranzes (38) mit dem ersten Zahnkranz (36) in der zweiten Schaltstellung (AUS) mittels einer Klauen-Verzahnung (40) erfolgt.

6. Antriebsvorrichtung nach einem der vorhergehenden Ansprüche,
**dadurch gekennzeichnet,**
**dass** der Tandemkasten (14) über einen Kugeldrehkranz (42) drehbar an dem Achsträger (12) gelagert ist.

7. Antriebsvorrichtung nach einem der vorhergehenden Ansprüche,
**dadurch gekennzeichnet,**
**dass** der Tandemachsenantrieb (32) ein Stirnrad (44) umfasst, wobei das Stirnrad (44) zugleich das zweite Sonnenrad (28) des abtriebsseitigen Planetengetriebes (22) ausbildet.

8. Antriebsvorrichtung nach einem der vorhergehenden Ansprüche,
**dadurch gekennzeichnet,**
**dass** die Antriebsvorrichtung (10) im Bereich des zweiten Zahnkranzes (38) axiale Anschläge (46, 48) zur Begrenzung der axialen Verschiebbarkeit des zweiten Zahnkranzes (38) aufweist.

9. Antriebsvorrichtung nach einem der vorhergehenden Ansprüche,
**dadurch gekennzeichnet,**
**dass** die Antriebsvorrichtung (10) eine Betätigungseinheit (50) zum axialen Verschieben des zweiten Zahnkranzes (38) von der ersten Schaltstellung (EIN) in die zweite Schaltstellung (AUS) und umgekehrt aufweist.

10. Antriebsvorrichtung nach Anspruch 9,
**dadurch gekennzeichnet,**
**dass** die Betätigungseinheit (50) mechanisch, hydraulisch und/oder elektrisch ausgebildet ist.

11. Antriebsvorrichtung nach einem der vorhergehenden Ansprüche,
**dadurch gekennzeichnet,**
**dass** die Antriebswelle (16) mit dem zweiten Sonnenrad (28) beziehungsweise dem Stirnrad (44) koaxial ausgebildet ist.

12. Antriebsvorrichtung nach einem der vorhergehenden Ansprüche,
**dadurch gekennzeichnet,**
**dass** der Tandemachsenantrieb (32) ein Zahnradantrieb, ein Ketten- oder Bandantrieb ist.

13. Verfahren zum Antrieb von Tandemachsen eines Fahrzeuges oder einer selbstfahrenden Arbeitsmaschine,
**dadurch gekennzeichnet,**
**dass** das Verfahren folgende Schritte umfasst:
a) Einleiten eines Antriebsmoments über eine Antriebswelle (16) und über ein Doppelplanetengetriebe (18) bestehen aus einem ersten antriebsseitigen Planetengetriebe (20) mit einem ersten Sonnenrad (24) und ersten Planetenrädern (26) und einem abtriebsseitigen Planetengetriebe (22) mit einem zweiten Sonnenrad (28) und zweiten Planetenrädern (30) auf einen Tandemachsenantrieb (32), wobei die ersten und zweiten Planetenräder (26, 30) über jeweils eine Planetenwelle (34) miteinander verbunden sind und die ersten Planetenräder (26) gegen einen ersten, mit dem Achsträger (12) verbundenen Zahnkranz (36) und die zweiten Planetenräder gegen einen zweiten, im Tandemkasten (14) angeordneten Zahnkranz (38) abgestützt sind; und
b) Betätigung einer Betätigungsvorrichtung (50) zum axialen Verschieben des zweiten Zahnkranzes (38) von einer ersten Schaltstellung (EIN) in eine zweite Schaltstellung (AUS) oder umgekehrt, wobei der zweite Zahnkranz (38) auf den zweiten Planetenrädern (30) verschiebbar ausgebildet ist, derart, dass er in der ersten Schaltstellung (EIN) der Antriebsvorrichtung (10) torsionsfest mit dem Tandemkasten (14) verbunden ist und in der zweiten Schaltstellung (AUS) vom Tandemkasten (14) gelöst und mit dem ersten Zahnkranz (36) verbunden ist.

14. Verfahren nach Anspruch 13,
**dadurch gekennzeichnet,**
**dass** zur Durchführung des Verfahrens eine Antriebsvorrichtung (10) eines Fahrzeuges oder einer selbstfahrenden Arbeitsmaschine nach einem Ansprüche 1 bis 12 verwendet wird.

## Claims

1. Drive device for tandem axles of a vehicle or of a self-moving working machine including an axle support (12) fixedly disposed on a vehicle frame or frame of the working machine and a tandem box (14) rotatably supported on the axle support (12), as well as including at least one drive shaft (16), wherein the driving torque of the drive shaft (16) is transferred through a double planetary gearing (18) consisting of a first input-side planetary gearing (20) with a first sun gear (24) and first planetary gears (26) and an output-side planetary gearing (22) with a second sun gear (28) and second planetary gears (30) to a tandem axle drive (32), and the first and second planetary gears (26, 30) are connected to each other through a planetary shaft (34), respectively, wherein the first planetary gears (26) are supported against a first toothed wheel (36) connected to the axle support (12), and the second planetary gears (30) are supported against a second toothed wheel (38) disposed in the tandem box (14),
**characterized in that**
the second toothed wheel (38) is formed displaceably on the second planetary gears (30) such that it is torsionally-fixed connected to the tandem box (14) in a first switching position (ON) of the drive device (10), and is detached from the tandem box (14) and connected to the first toothed wheel (36) in a second switching position (OFF).

2. Drive device according to claim 1,
**characterized in that**
a form, force or friction locking connection is formed for connecting the second toothed wheel (38) to the tandem box (14) in the first switching position (ON).

3. Drive device according to claim 2,
**characterized in that**
the connection of the second toothed wheel (38) to the tandem box (14) in the first switching position (ON) is effected by means of a bolt connection, a toothing or through friction disks.

4. Drive device according to one of the preceding claims,
**characterized in that**
for connecting the second toothed wheel (38) to the first toothed wheel (36) in the second switching position (OFF) a form, force or friction locking connection is formed.

5. Drive device according to claim 4,
**characterized in that**
the connection of the second toothed wheel (38) to the first toothed wheel (36) in the second switching position (OFF) is effected by means of a claw toothing (40).

6. Drive device according to one of the preceding claims,
**characterized in that**
the tandem box (14) is rotatably supported on the axle support (12) through a ball turning ring (42).

7. Drive device according to one of the preceding claims,
**characterized in that**
the tandem axle drive (32) includes a spur gear (44), wherein the spur gear (44) additionally forms the second sun gear (28) of the output-side planetary gearing (22).

8. Drive device according to one of the preceding claims,
**characterized in that**
the drive device (10) has axial stops (46, 48) for limiting the axial displaceability of the second toothed wheel (38) in the region of the second toothed wheel (38).

9. Drive device according to one of the preceding claims,
**characterized in that**
the drive device (10) has an actuation unit (50) for axially displacing the second toothed wheel (38) from the first switching position (ON) into the second switching position (OFF) and vice versa.

10. Drive device according to claim 9,
**characterized in that**
the actuation unit (50) is formed mechanically, hydraulically and/or electrically.

11. Drive device according to one of the preceding claims,
**characterized in that**
the drive shaft (16) is formed coaxially with the second sun gear (28) or the spur gear (44), respectively.

12. Drive device according to one of the preceding claims,
**characterized in that**
the tandem axle drive (32) is a gear drive, a chain or belt drive.

13. Method for driving tandem axles of a vehicle or of a self-moving working machine,
**characterized in that**
the method comprises the following steps:
a) introducing a driving torque through a drive shaft (16) and through a double planetary gearing (18) consisting of a first input-side planetary gearing (20) with a first sun gear (24) and first planetary gears (26) and an output-side planetary gearing (22) with a second sun gear (28) and second planetary gears (30) to a tandem axle drive (32), wherein the first and second planetary gears (26, 30) are connected to each other through a planetary shaft (34), respectively, and the first planetary gears (26) are supported against a first toothed wheel (36) connected to the axle support (12), and the second planetary gears are supported against a second toothed wheel (38) disposed in the tandem box (14); and
b) actuating an actuation device (50) for axially displacing the second toothed wheel (38) from a first switching position (ON) into a second switching position (OFF) or vice versa, wherein the second toothed wheel (38) is formed displaceable on the second planetary gears (30) such that it is torsionally-fixed connected to the tandem box (14) in the first switching position (ON) of the drive device (10) and detached from the tandem box (14) and connected to the first toothed wheel (36) in the second switching position (OFF).

14. Method according to claim 13,
**characterized in that**
a drive device (10) of a vehicle or of a self-moving working machine according to any one of claims 1 to 12 is used for performing the method.

## Revendications

1. Mécanisme d'entraînement pour des essieux-tandems d'un véhicule ou d'un engin de chantier automoteur, qui comprend un support d'essieu (12), disposé de manière fixe sur un châssis de véhicule ou un châssis de l'engin de chantier et un boîtier tandem (14), logé sur le support d'essieu (12) de manière rotative, ainsi qu'avec au moins un arbre d'entraînement (16), le couple d'entraînement de l'arbre d'entraînement (16) étant transmis à un entraînement des essieux-tandems (32) par l'intermédiaire d'un engrenage planétaire double (18) se composant d'un premier engrenage planétaire (20), côté entraînement, avec une première roue solaire (24) et des premières roues planétaires (26) et d'un engrenage planétaire (22), côté sortie, avec une deuxième roue solaire (28) et des deuxièmes roues planétaires (30) et les premières et deuxièmes roues planétaires (26, 30) étant reliées entre elles par l'intermédiaire respectivement d'un arbre planétaire (34), les premières roues planétaires (26) s'appuyant contre une première couronne dentée (36), reliée au support d'essieu (12) et les deuxièmes roues planétaires (30) s'appuyant contre une deuxième couronne dentée (38), disposée dans le boîtier tandem (14),
**caractérisé en ce que**
la deuxième couronne dentée (38) est formée de manière mobile sur les deuxièmes roues planétaires (30), de telle sorte qu'elle est reliée au boîtier tandem (14) d'une manière résistant à la torsion dans une première position de commutation (MARCHE) du mécanisme d'entraînement (10) et qu'elle est détachée du boîtier tandem (14) dans une deuxième position de commutation (ARRÊT) et qu'elle est reliée à la première couronne dentée (36).

2. Mécanisme d'entraînement suivant la revendication 1,
**caractérisé en ce que**
pour relier la deuxième couronne dentée (38) au boîtier tandem (14) dans la première position de commutation (MARCHE), une liaison par complémentarité de forme, de force ou de friction est formée.

3. Mécanisme d'entraînement suivant la revendication 2,
**caractérisé en ce que**
la liaison de la deuxième couronne dentée (38) avec le boîtier tandem (14) dans la première position de commutation (MARCHE) s'opère au moyen d'un assemblage par boulons, d'un engrènement ou par l'intermédiaire de disques de friction.

4. Mécanisme d'entraînement suivant l'une des revendications précédentes,
**caractérisé en ce que**
pour relier la deuxième couronne dentée (38) à la première couronne dentée (36) dans la deuxième position de commutation (ARRÊT), une liaison par complémentarité de forme, de force ou de friction est formée.

5. Mécanisme d'entraînement suivant la revendication 4,
**caractérisé en ce que**
la liaison de la deuxième couronne dentée (38) avec la première couronne dentée (36) dans la deuxième position de commutation (ARRÊT) s'opère au moyen d'une denture de crabot (40).

6. Mécanisme d'entraînement suivant l'une des revendications précédentes,
**caractérisé en ce que**
le boîtier tandem (14) est logé de manière rotative sur le support d'essieu (12) par l'intermédiaire d'une couronne de rotation à billes (42).

7. Mécanisme d'entraînement suivant l'une des revendications précédentes,
**caractérisé en ce que**
l'entraînement de l'essieu-tandem (32) comprend un pignon droit (44), le pignon droit (44) formant simultanément la deuxième roue solaire (28) de l'engrenage planétaire (22) côté sortie.

8. Mécanisme d'entraînement suivant l'une des revendications précédentes,
**caractérisé en ce que**
le mécanisme d'entraînement (10) présente, dans le secteur de la deuxième couronne dentée (38) des butées axiales (46, 48), pour limiter la mobilité axiale de la deuxième couronne dentée (38).

9. Mécanisme d'entraînement suivant l'une des revendications précédentes,
**caractérisé en ce que**
le mécanisme d'entraînement (10) présente une unité d'actionnement (50), pour déplacer axialement la deuxième couronne dentée (38) de la première position de commutation (MARCHE) dans la deuxième position de commutation (ARRÊT) et inversement.

10. Mécanisme d'entraînement suivant la revendication 9,
**caractérisé en ce que**
l'unité d'actionnement (50) est formée mécaniquement, hydrauliquement et/ou électriquement.

11. Mécanisme d'entraînement suivant l'une des revendications précédentes,
**caractérisé en ce que**
l'arbre d'entraînement (16) est formé de manière coaxiale avec la deuxième roue solaire (28) ou avec le pignon droit (44).

12. Mécanisme d'entraînement suivant l'une des revendications précédentes,
**caractérisé en ce que**
l'entraînement de l'essieu-tandem (32) est un entraînement par roue dentée, par chaîne ou par bande.

13. Procédé d'entraînement d'essieux-tandems d'un véhicule ou d'un engin de chantier automoteur,
**caractérisé en ce que**
le procédé comprend les étapes suivantes :
a) introduction d'un couple d'entraînement par l'intermédiaire d'un arbre d'entraînement (16) et par l'intermédiaire d'un engrenage planétaire double (18) se composant d'un premier engrenage planétaire (20) côté entraînement, avec une première roue solaire (24) et des premières roues planétaires (26) et d'un engrenage planétaire (22), côté sortie, avec une deuxième roue solaire (28) et des deuxièmes roues planétaires (30) sur un entraînement d'essieux-tandems (32), les premières et deuxièmes roues planétaires (26, 30) étant reliées entre elles par l'intermédiaire respectivement un arbre planétaire (34) et les premières roues planétaires (26) s'appuyant contre une première couronne dentée (36), reliée au support d'essieu (12) et les deuxièmes roues planétaires (30) s'appuyant contre une deuxième couronne dentée (38), disposée dans le boîtier tandem (14) et
b) actionnement d'un mécanisme d'actionnement (50) pour déplacer axialement la deuxième couronne dentée (38) d'une première position de commutation (MARCHE) dans une deuxième position de commutation (ARRÊT) ou inversement, la deuxième couronne dentée (38) étant formée de manière mobile sur les deuxièmes roues planétaires (30), de telle sorte qu'elle est reliée au boîtier tandem (14) d'une manière résistant à la torsion dans la première position de commutation (MARCHE) du mécanisme d'entraînement (10) et qu'elle est détachée du boîtier tandem (14) dans la deuxième position de commutation (ARRÊT) et qu'elle est reliée à la première couronne dentée (36).

14. Procédé suivant la revendication 13,
**caractérisé en ce**
**qu'**on utilise, pour réaliser le procédé, un mécanisme d'entraînement (10) d'un véhicule ou d'un engin de chantier automoteur, suivant l'une des revendications 1 à 12.
